(19) Europäisches Patentamt
European Patent Office
Office européen des brevets

(11) Publication number: **0 150 959**
**A2**

# (12) EUROPEAN PATENT APPLICATION

(21) Application number: **85300311.9**

(22) Date of filing: **17.01.85**

(51) Int. Cl.[4]: **A 01 N 57/20**
//
(A01N57/20, 47:14,
47:04, 41:12, 37:34)

(30) Priority: **20.01.84 JP 9350/84**
**23.01.84 JP 10875/84**
**23.01.84 JP 10876/84**

(43) Date of publication of application: **07.08.85**
**Bulletin 85/32**

(84) Designated Contracting States: **AT BE CH DE FR GB IT LI NL**

(71) Applicant: **SUMITOMO CHEMICAL COMPANY, LIMITED,**
**15 Kitahama 5-chome Higashi-ku, Osaka-shi**
**Osaka 541 (JP)**

(72) Inventor: **Oguri, Yukio, Sonehigashinocho-2-chome,**
**Toyonaka-shi (JP)**
Inventor: **Sasaki, Mitsuru,**
**10-1-112 Sonehigashinocho-2-chome, Toyonaka-shi (JP)**

(74) Representative: **Harrison, David Christopher et al,**
**MEWBURN ELLIS & CO 2/3 Cursitor Street, London**
**EC4A 1BQ (GB)**

## (54) A fungicidal composition.

(57) A fungicidal composition comprises an inert carrier and as an active ingredient, a fungicidally effective amount of an $\alpha$-hydroxy(-$\beta$-halo)ethylphosphinic acid of the formula:

```
             O
             ||
XCH2CH  -  P  -  OH  ,
      |      |
     OH     H
```

wherein X is a hydrogen atom, a chlorine atom or a bromine atom, its salt or its ester and a member selected from maneb, mancozeb, captan, captafol, folpet and chlorothalonil.

EP 0 150 959 A2

# A FUNGICIDAL COMPOSITION

The present invention relates to a fungicidal composition comprising an inert carrier or diluent and as active ingredients, α-hydroxy(-β-halo)ethylphosphinic acid represented by the formula:

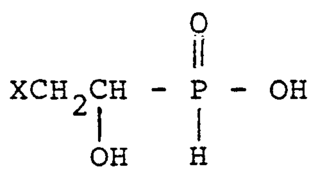

(I)

wherein X is a hydrogen atom, a chlorine atom or a bromine atom, its salt or its ester and a member selected from maneb-[manganese ethylenebis(dithiocarbamate)], mancozeb[zinc manganese ethylenebis(dithiocarbamate)], captan[N-(trichloromethylthio)-4-cyclohexene-1,2-dicarboxyimide], captafol[N-(1,1,2,2-tetrachloroethylthio)-4-cyclohexene-1,2-dicarboxyimide], folpet[N-(trichloromethylthio)-phthalimide] and chlorothalonil(tetrachloroisophthalonitrile, hereinafter referred as "TPN").

Maneb, mancozeb, captan, captafol, folpet and TPN are known as preventative agents for protecting fruits, vegetables, and other useful plants from various diseases. However, these fungicides are not always satisfactory as protectants for controlling diseases. They are also unsatisfactory as curative fungicides.

As described in

JP-A-175107/1982, JP-A-188889/1983 and JP-A-101499/1984, α-hydroxy(-β-halo)ethylphosphinic acid of the formula (I), its salt or its ester has a sufficient controlling effect on plant diseases, such as late blights and downy mildews, caused by phytopathogenic fungi belonging to Phycomycetes.

The object of this invention is to provide a preventative and/or curative fungicidal composition that can simultaneously control various plant diseases at the lowest possible doses and maintain its preventative and/or curative effect.

The above object and others are accomplished by providing a fungicidal composition comprising, as active ingredients, α-hydroxy-(-β-halo)ethylphosphinic acid of the formula (I), its salt or its ester and a member selected from maneb, mancozeb, captan, captafol, folpet and TPN.

The fungicidal composition of this invention has preventative and/or curative effect on the plant diseases of the following plants (pathogens): citrus (*Diaporthe citri*; *Elsinoe fawcetti*; *Penicillium digitatum*, *P. italicum*), apple (*Sclerotinia mali*; *Valsa mali*; *Podosphaera leucotricha*; *Alternaria mali*; *Venturia inaequalis*; *Phytophthora cactorum*), pear (*Venturia nashicola*; *Alternaria kikuchiana*; *Gymnosporangium haraeanum*), peach (*Sclerotinia cinerea*; *Cladosporium carpophilum*; *Phomopsis sp.*), grape (*Elsinoe ampelina*; *Glomerella cingulata*; *Uncinula necator*; *Phakopsora amelopsidis*, *Plasmopara viticola*), persimmon (*Gloeosporium kaki*; *Cercospora kaki*, *Mycosphaerella nawae*), melons

(Colletotrichum lagenarium; Sphaerotheca fuliginea; Mycosphaerella melonis), tomato (Alternaria solani; Cladosporium fulvum; Phytophthora infestance; P. capsici), egg plant (Phomopsis vexans; Erysiphe cichoracearum; Phytophthora infestance), vegetables of rape family (Alternaria japonica; Cercosporella brassicae), stone-leek (Puccinia allii), soybean (Cercospora kikuchii; Elsinoe glycines; Diaporthe phaseolorum var. sajae; Pythium aphanidermatum; P. debaryanum; P. irregulare; P. myriotyrum; P. ultimum), kidny bean (Colletotrichum lindemuthianum; Phytophthoron nicotianae var. nicotianae), peanut (Mycosphaerella personatum; Cercospora arachidicola), pea (Erysiphe pisi), potato (Alternaria solani; Phytophthora infestance), strawberry (Sphaerotheca humuli; Phytophthora cactorum), tea (Exobasidium reticulatum; Elsinoe leucospila), tobacco (Alternaria longipes; Erysiphe cichoracearum; Colletotrichum tabacum; Peronospora tabacina; Pythium debaryanum; Phytophthora nicotianae var. nicotianae), sugar beat (Cercospora beticola), rose (Diplocarpon rosae; Sphaerotheca pannosa), chrysanthemum (Septoria chrysanthemi-indici; Puccinia horiana), various crops (Botrytis cinerea; Sclerotinia sclerotiorum), vegetables and raddish (Peronospora brassicae), spinach (Peronospora spinaciae; Pythium sp.), cucumber (Pseudoperonospora cubensis; Pythium aphanidermatum; Phytophthora capsici), umbelliferae plants (Plasmopara nivea), carrot (Phytophthora cactorum), pineapple (Phytophthora cinnamomi), onion (Phytophthora nicotianae var. nicotianae), wheat (Pythium sp.) and the like.

The present composition, therefore, can widely

be used as a fungicide for paddy field, ploughland, orchard, tea garden, mulberry garden, pasture, turf and the like.

When the present composition is used as an agricultural and horticultural fungicide, it is formulated into any composition form such as wettable powders, flowables, granules, dusts, etc. by mixing with an inert carrier or diluent such as a solid or liquid carrier, a surface active agent and other auxiliaries for formulation. The ratio of α-hydroxy(-β-halo)ethylphosphinic acid of the formula (I), its salt or its ester and a member selected from maneb, mancozeb, captan, captafol, folpet and TPN is 1 : 0.1 - 1 : 10, preferably 1 : 0.25 - 1 : 4. These various forms of compositions contain 0.1 - 99.9%, preferably 1 - 90%, by total weight of the active ingredients.

The solid carrier includes for example fine powders or granules of kaolin clay, attapulgite clay, bentonite, terra alba, pyrophyllite, talc, diatomaceous earth, calcite, corn stalk powder, walnut shell powder, urea, ammonium sulfate, synthetic hydrated silicon dioxide and the like. The liquid carrier includes for example aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton seed oil), dimethyl sulfoxide, acetonitrile, water and the like.

The surface active agent used for emulsification, dispersion, wetting, etc. includes for example anionic surface active agents such as salts of alkyl sulfate,

alkyl(aryl)sulfonates, dialkyl sulfosuccinates, salts of polyoxyethylene alkylaryl ether phosphoric acid ester, naphthalenesulfonic acid/formalin condensation products, etc., and nonionic ones such as polyoxyethylene alkyl ether, polyoxyethylene polyoxypropylene block copolymers, sorbitan fatty acid esters, polyoxyethylene sorbitan fatty acid esters, etc. The auxiliaries for formulation include for example lignosulfonates, alginates, polyvinyl alcohol, gum arabic, CMC (carboxymethyl cellulose), PAP (isopropyl acid phosphate) and the like.

Formulation examples for the present composition will be shown. Parts in the examples are by weight.

Formulation Example 1

25 Parts of calcium α-hydroxyethylphosphinate, 25 parts of mancozeb, 3 parts of calcium lignosulfonate, 2 parts of sodium lauryl sulfate and 45 parts of synthetic hydrated silicon dioxide are thoroughly pulverized and mixed to obtain a wettable powder.

Formulation Example 2

0.5 Part of t-butylammonium α-hydroxy-β-chloroethylphosphinate, 1.5 parts of captan, 1 part of synthetic hydrated silicon dioxide, 2 parts of calcium lignosulfonate, 30 parts of bentonite and 65 parts of kaolin clay are thoroughly pulverized and mixed together, well kneaded with water, granulated and then dried to obtain a granule.

Formulation Example 3

10 Parts of calcium α-hydroxy-β-bromoethylphosphinate, 20 parts of TPN, 3 parts of polyoxyethylene sorbitan monooleate, 3 parts of CMC and 64 parts of water are mixed and wet-pulverized until the particle size is reduced to not more than 5 microns to obtain a flowable.

Formulation Example 4

2 Parts of s-butyl α-hydroxy-β-bromoethylphosphinate, 0.5 part of folpet, 87.5 parts of kaolin clay and 10 parts of talc are thoroughly pulverized and mixed together to obtain a dust.

The present compositions, either as such or as aqueous solutions, are used in foliar treatment or soil treatment, or they are scattered on soil surface as dust or granule and mixed with the soil. The present composition may also be used in mixture with insecticides, acaricides, nematocides, herbicides, plant growth regulating agents, fertilizers, soil improvers and the like.

The dosage rate of the present composition is, as an active ingredient, generally 5 to 2000 g per are, preferably 10 to 1000 g per are. When the wettable powder, flowable or the like is applied in dilution with water, the application concentration of the active ingredients is generally 0.001 to 1.0%, and the granule, dust or the like is applied as such without dilution.

The present compositions useful as an active

1 ingredient for plant disease-controlling agents will be shown in the following Test Examples. The compounds are shown by a compound number in Table 1, and compounds used as a control are shown by compound symbol in Table 1.

Table 1

| Compound number or symbol | Chemical name | Remark |
|---|---|---|
| 1 | α-hydroxyethylphosphinic acid | |
| 2 | calcium α-hydroxyethylphosphinate | |
| 3 | t-butylammonium α-hydroxyethyl-phosphinate | |
| 4 | s-butyl α-hydroxyethylphos-phinate | |
| 5 | α-hydroxy-β-chloroethylphosphinic acid | |
| 6 | calcium α-hydroxy-β-chloroethyl-phosphinate | |
| 7 | t-butylammonium α-hydroxy-β-chloroethylphosphinate | |
| 8 | s-butyl α-hydroxy-β-chloroethyl-phosphinate | |
| 9 | α-hydroxy-β-bromoethylphosphinic acid | |
| 10 | calcium α-hydroxy-β-bromoethyl-phosphinate | |
| 11 | t-butylammonium α-hydroxy-β-bromoethylphosphinate | |
| 12 | s-butyl α-hydroxy-β-bromoethyl-phosphinate | |
| A | aluminum tris(O-ethyl phosphonate) | Commercially available fungicide "Aliette" |

The controlling activity is indicated by numerical values representing six steps of evaluation obtained as follows: The condition of disease of test plants on examination, i.e. the degrees of colony and infected area on the leaves, stems, etc. are observed with the naked eye, and the results of observation are graded into six steps, 0, 1, 2, 3, 4 and 5, as follows:

5 Colony and infected area are not noticed at all.

4 About 10% of colony and infected area is observed.

3 About 30% of colony and infected area is observed.

2 About 50% of colony and infected area is observed.

1 About 70% of colony and infected area is observed.

0 Not less than about 70% of colony and infected area is observed, there being no difference in the condition of disease between use of the present compounds and no use of them.

Example I Controlling test on late blight of tomato

Seeds of tomato (species: "Ponterosa") were sowed in soil filled in plastic pots and cultivated in a green-house for 50 days to obtain seedlings of tomato at the 6 to 7-leaved stage. An aqueous dilution of the test compound in the form of wettable powder formulated according to Formulation Example 1 was applied onto the seedlings by foliar treatment. Then, the seedlings were grown in the greenhouse for 7 days. A spore suspension of Phytophthora infestance was sprayed onto the seedlings, which were placed at 20°C under a humid condition for 1 day and then grown

under the irradiation with a fluorescent lamp for 5 days. The state of infection of the plants was observed. The results are shown in Table 2.

Table 2

| Test compound | Dosage of active ingredient (ppm) | Control effect |
|---|---|---|
| 2 | 250<br>125 | 3<br>1 |
| 6 | 250<br>125 | 3<br>0 |
| 10 | 250<br>125 | 3<br>1 |
| Maneb | 250<br>50 | 4<br>2 |
| Captan | 250<br>50 | 3<br>2 |
| Captafol | 250<br>50 | 4<br>2 |
| TPN | 250<br>50 | 4<br>3 |
| 2 + Maneb | 200 + 50<br>125 + 125 | 5<br>5 |
| 2 + Captafol | 200 + 50<br>125 + 125 | 5<br>5 |
| 6 + Captan | 200 + 50<br>125 + 125 | 4<br>5 |
| 6 + TPN | 200 + 50<br>125 + 125 | 4<br>5 |
| 10 + Maneb | 200 + 50<br>125 + 125 | 5<br>5 |
| 10 + Captafol | 200 + 50<br>125 + 125 | 5<br>5 |

- Cont'd -

Table 2 (Cont'd)

| | | |
|---|---|---|
| 10 + TPN | 200 + 50<br>125 + 125 | 5<br>5 |
| A | 250<br>125 | 1<br>0 |
| A + Maneb | 200 + 50<br>125 + 125 | 2<br>3 |
| A + Captan | 200 + 50<br>125 + 125 | 2<br>3 |
| A + TPN | 200 + 50<br>125 + 125 | 3<br>4 |

Example II Controlling test on late blight of potato

Seeds of potato (species: "Danshaku") were sowed in soil filled in plastic pots and cultivated in a greenhouse for 40 days to obtain seedlings of potato. A spore suspension of Phytophthora infestans was sprayed onto the seedlings, which were placed at 20°C under a humid condition for 1 day. Then, an aqueous dilution of the test compound in the form of wettable powder prepared according to Formulation Example 1 was applied onto the seedlings by foliar treatment. Thereafter, the seedlings were grown at 20°C under the irradiation with a fluorescent lamp for 7 days. The state of infection of the plants was observed. The results are shown in Table 3.

Table 3

| Test compound | Dosage of active ingredient (ppm) | Control effect |
|---|---|---|
| 1 | 250<br>125 | 3<br>1 |
| 5 | 250<br>125 | 3<br>0 |
| 9 | 250<br>125 | 3<br>1 |
| Mancozeb | 250<br>50 | 0<br>0 |
| Folpet | 250<br>50 | 0<br>0 |
| TPN | 250<br>50 | 0<br>0 |
| 1 + Mancozeb | 200 + 50<br>125 + 125 | 4<br>3 |
| 1 + TPN | 200 + 50<br>125 + 125 | 4<br>3 |
| 5 + Mancozeb | 200 + 50<br>125 + 125 | 4<br>2 |
| 9 + Folpet | 200 + 50<br>125 + 125 | 4<br>3 |
| 9 + TPN | 200 + 50<br>125 + 125 | 4<br>3 |
| A | 250<br>125 | 1<br>0 |
| A + Mancozeb | 200 + 50<br>125 + 125 | 0<br>0 |
| A + Folpet | 200 + 50<br>125 + 125 | 0<br>0 |
| A + TPN | 200 + 50<br>125 + 125 | 0<br>0 |

Example III Controlling test on anthracnose of grape

Seeds of grape were sowed in soil filled in plastic pots and cultivated in a green-house for 50 days to obtain seedlings of grape at the 5 to 6-leaved stage. An aqueous dilution of the test compound in the form of flowable prepared according to Formulation example 3 was applied onto the seedlings by foliar treatment. After spraying, a spore suspension of *Elsinoe ampelina* was sprayed onto the seedlings, which were placed at 20°C under a humid condition for 3 days and then grown under the irradiation with a fluorescent lamp for 10 days. The state of infection of the plants was observed. The results are shown in Table 4.

Table 4

| Test compound | Dosage of active ingredient (ppm) | Control effect |
|---|---|---|
| 3 | 250<br>125 | 0<br>0 |
| 7 | 250<br>125 | 0<br>0 |
| 11 | 250<br>125 | 0<br>0 |
| Mancozeb | 250<br>125 | 3<br>2 |
| Captan | 250<br>125 | 3<br>1 |
| 3 + Captan | 125 + 125 | 4 |
| 7 + Mancozeb | 125 + 125 | 4 |
| 7 + Captan | 125 + 125 | 4 |
| 11 + Mancozeb | 125 + 125 | 4 |
| A | 250<br>125 | 0<br>0 |
| A + Mancozeb | 125 + 125 | 2 |
| A + Captan | 125 + 125 | 2 |

Example IV Controlling test on downy mildew of cucumber

Seeds of cucumber (species: "Sagamihanjiro") were sowed in soil filled in plastic pots and cultivated in a greenhouse for 30 days to obtain seedlings of cucumber at the 3 to 4-leaved stage. An aqueous dilution of the test compound in the form of wettable powder prepared according to Formulation example 1 was applied onto the seedlings by foliar treatment. Then, the seedlings were grown in the greenhouse for 7 days. A spore suspension of Pseudoperonospora cubensis was sprayed onto the seedlings, which were placed at 20°C under a humid condition for 1 day and then grown under the irradiation with a fluorescent lamp for 5 days. The state of infection of the plants was observed. The results are shown in Table 5.

Table 5

| Test compound | Dosage of active ingredient (ppm) | Control effect |
|---|---|---|
| 1 | 450<br>300 | 4<br>3 |
| 2 | 450<br>300 | 4<br>3 |
| 7 | 450<br>300 | 3<br>2 |
| 12 | 450<br>300 | 4<br>3 |
| TPN | 450<br>150 | 3<br>3 |
| 1 + TPN | 300 + 150 | 5 |
| 2 + TPN | 300 + 150 | 5 |
| 7 + TPN | 300 + 150 | 4 |
| 12 + TPN | 300 + 150 | 5 |

Example V  Controlling test on downy mildew of grape

Seeds of grape were sowed in soil filled in plastic pots and cultivated in a greenhouse for 50 days to obtain seedlings of grape at the 5 to 6-leaved stage. An aqueous dilution of the test compound in the form of wettable powder prepared according to Formulation example 1 was applied onto the seedlings by foliar treatment. After 7 days, a spore suspension of *Plasmopara viticola* was sprayed onto the seedlings, which were placed at 20°C under a humid

condition for 3 days and then grown under the irradiation with a fluorescent lamp for 7 days. The state of infection of the plants was observed. The results are shown in Table 6.

Table 6

| Test compound | Dosage of active ingredient (ppm) | Control effect |
|---|---|---|
| 2 | 400<br>200 | 4<br>2 |
| 4 | 400<br>200 | 4<br>2 |
| 6 | 400<br>200 | 3<br>2 |
| 10 | 400<br>200 | 4<br>2 |
| Maneb | 400<br>200 | 3<br>2 |
| Mancozeb | 400<br>200 | 3<br>2 |
| Captafol | 400<br>200 | 3<br>2 |
| 2 + Maneb | 200 + 200 | 5 |
| 2 + Captafol | 200 + 200 | 5 |
| 4 + Mancozeb | 200 + 200 | 5 |
| 4 + Captafol | 200 + 200 | 5 |
| 6 + Maneb | 200 + 200 | 5 |

- Cont'd -

Table 6 (Cont'd)

| | | |
|---|---|---|
| 6 + Mancozeb | 200 + 200 | 5 |
| 10 + Mancozeb | 200 + 200 | 5 |
| 10 + Captafol | 200 + 200 | 5 |

1 Example VI Controlling test on early blight of tomato

Seeds of tomato (species: "Ponterosa") were sowed in soil filled in plastic pots and cultivated in a greenhouse for 30 days to obtain seedlings of tomato at the 3 to 4-leaved stage. Then, an aqueous dilution of the test compound in the form of wettable powder prepared according to Formulation example 1 was applied onto the seedlings by foliar treatment. A spore suspension of Alternalia solani was sprayed onto the seedlings, which were placed at 20°C under a humid condition for 6 days. The state of infection of the plants was observed. The results are shown in Table 7.

Table 7

| Test compound | Dosage of active ingredient (ppm) | Control effect |
| --- | --- | --- |
| 3 | 400<br>200 | 0<br>0 |
| 8 | 400<br>200 | 0<br>0 |
| 11 | 400<br>200 | 0<br>0 |
| Captafol | 400<br>200 | 3<br>2 |
| TPN | 400<br>200 | 3<br>2 |
| 3 + Captafol | 200 + 200 | 4 |
| 8 + TPN | 200 + 200 | 4 |
| 11 + Captafol | 200 + 200 | 4 |
| 11 + TPN | 200 + 200 | 4 |
| A | 400<br>200 | 0<br>0 |
| A + Captafol | 200 + 200 | 2 |
| A + TPN | 200 + 200 | 2 |

CLAIMS:-

1. A fungicidal composition which comprises an inert carrier and as an active ingredient, a fungicidally effective amount of α-hydroxy(-β-halo)ethylphosphinic acid represented by the formula:

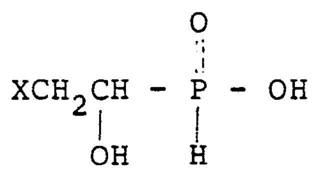

(I)

wherein X is a hydrogen atom, a chlorine atom or a bromine atom, its salt or its ester and a member selected from maneb, mancozeb, captan, captafol, folpet and chlorothalonil.

2. The composition according to Claim 1 wherein the α-hydroxy(-β-halo)ethylphosphinic acid, its salt or its ester is α-hydroxyethylphosphinic acid, calcium α-hydroxyethylphosphinate, t-butylammonium α-hydroxyethylphosphinate, s-butyl α-hydroxyethylphosphinate, α-hydroxy-β-chloroethylphosphinic acid, calcium α-hydroxy-β-chloroethylphosphinate, t-butylammonium α-hydroxy-β-chloroethylphosphinate, s-butyl α-hydroxy-β-chloroethylphosphinate, α-hydroxy-β-bromoethylphosphinic acid, calcium α-hydroxy-β-bromoethylphosphinate, t-butylammonium α-hydroxy-β-bromoethylphosphinate or s-butyl α-hydroxy-β-bromoethylphosphinate.

3. A method of formulating a fungicidal composition which comprises mixing the α-hydroxy(-β-halo)ethylphosphinic acid of the formula (I), given and defined in claim 1, its salt or its ester and a member selected from maneb, mancozeb, captan, captafol, folpet and chlorothalonil with an inert carrier or diluent.

4. A fungicidal composition comprising a mixture of a compound of the formula (I), given and defined in claim 1, or a salt or ester thereof, with a compound selected from maneb, mancozeb, captan, captafol, folpet and chlorothalonil.